## Europäisches Patentamt
## European Patent Office
## Office européen des brevets

(11) Veröffentlichungsnummer: **0 152 373**
**B1**

(12) **EUROPÄISCHE PATENTSCHRIFT**

(45) Veröffentlichungstag der Patentschrift:
12.07.89

(21) Anmeldenummer: **85810025.8**

(22) Anmeldetag: **25.01.85**

(51) Int. Cl.⁴: **F 16 J 9/00,** B 65 D 83/00,
F 16 J 15/48

(54) **Auspresskolben für Behälter.**

(30) Priorität: **16.02.84 DE 3405547**

(43) Veröffentlichungstag der Anmeldung:
**21.08.85 Patentblatt 85/34**

(45) Bekanntmachung des Hinweises auf die Patenterteilung:
**12.07.89 Patentblatt 89/28**

(84) Benannte Vertragsstaaten:
**AT BE CH DE FR GB IT LI NL SE**

(56) Entgegenhaltungen:
**EP-A-0 094 033**
**GB-A-2 006 892**
**US-A-2 361 647**

(73) Patentinhaber: **HILTI Aktiengesellschaft, FL- 9494 Schaan (LI)**

(72) Erfinder: **Hoffmann, Armin, Luitpoldstrasse 13, D-8034 Germering (DE)**

(74) Vertreter: **Wildi, Roland, Hilti Aktiengesellschaft Patentabteilung, FL- 9490 Schaan (LI)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Die Erfindung betrifft einen Auspresskolben für zylindrische, eine plastische Masse enthaltende Behälter, der an seiner Aussenseite mit einer Ringnut versehen ist, wobei in der Ringnut ein elastisch verformbarer Dichtring angeordnet ist.

Behälter mit Auspresskolben für plastische Massen werden meist nur einmal verwendet und dienen gleichzeitig als Verpackung sowie, zusammen mit einem entsprechenden Auspressgerät, als Abgabevorrichtung für eine bestimmte Menge an Masse. Sowohl der Behalter als auch der Auspresskolben werden aus Kostengrunden meist aus Kunststoff hergestellt. Je nach Viskosität der abzugebenden Masse sind für das Auspressen der Masse erhebliche Kräfte erforderlich. Dies wiederum ergibt einen hohen Druck, den die Masse sowohl auf den Kolben als auch auf die Behälterwandung ausübt. Durch den Druck auf die Behälterwandung kann sich der Behälter radial ausdehnen, so dass zwischen dem Auspresskolben und dem Behälter radiales Spiel entstehen kann. Dieses radiale Spiel kann einen Ringspalt bilden, durch den ein Teil der abzugebenden Masse entgegen der Auspressrichtung aus dem Behalter entweicht. Diese Masse kann zu einer Behinderung des Vorschubmechanismus' führen, wodurch nach kürzerer oder längerer Zeit Betriebsunterbrüche entstehen können.

Um ein solches Entweichen von Masse zu verhindern, weisen bekannte Auspresskolben verschiedene Massnahmen, wie beispielsweise radial federnde Dichtlippen, Druckausgleichsnuten oder dergleichen, auf. Andere Auspresskolben können durch Verformung des Kolbenbodens radial aufgeweitet werden. All diese Massnahmen sind jedoch entweder zu aufwendig oder in ihrer Wirkung nicht ausreichend.

Ebenfalls in seiner Wirkung nicht ausreichend ist der aus der US-A-2 361 647 bekannte Auspresskolben, bei welchem in einer Ringnut ein Dichtring angeordnet ist. Insbesondere bei einer radialen Ausdehnung des Behälters lässt die Dichtung zwischen Dichtring und Behälterwandung derart nach, dass ein Ringspalt entstehen kann und dadurch in unerwünschter Weise Masse entweicht.

Der Erfindung liegt die Aufgabe zugrunde, einen Auspresskolben für plastische Masse enthaltende Behälter zu schaffen, der zu einer ausreichenden Abdichtung zwischen dem Auspresskolben und der Behälterwandung führt und ausserdem eine Betätigung mit geringen Vorschubkräften ermöglicht.

Gemäß der Erfindung wird dies dadurch erreicht, dass die Ringnut eine sich entgegen der Auspressrichtung verringernde Tiefe aufweist und die Breite der Ringnut grösser ist, als die Breite des Dichtringes.

Im Gegensatz zu dem aus der GB-2 006 892 bekannten Dichtring, wo es darum geht ein Kabel gegenüber einem Verschlussgehäuse abzudichten, kann sich der Dichtring dank der erfindungsgemäßen Dimensionierung der Ringnut axial verschieben und sich entsprechend den Druckverhältnissen dem Behälter anpassen. Infolge der auftretenden Reibung zwischen Dichtring und Behälterwandung sowie aufgrund des auf den Dichtring einwirkenden Druckes wird der Dichtring beim Vorschieben des Auspresskolbens innerhalb der Ringnut axial verschoben. Durch die sich entgegen der Auspressrichtung verringernde Tiefe der Ringnut wird der Dichtring dabei ausgedehnt und radial nach aussen gegen die Behälterwandung gepresst.

Zum Einführen des Auspresskolbens in den Behälter kann der Dichtring in den Bereich der grössten Tiefe der Ringnut verschoben werden. Dabei überragt der Dichtring den Auspresskolben radial nur geringfügig, so dass der Auspresskolben mit geringem Kraftaufwand in den Behälter eingeführt werden kann. Die Breite des Dichtringes kann vorzugsweise etwa das 0,5- bis 0,8-fache der Breite der Ringnut betragen.

Um ein Verschieben des Dichtringes zu erleichtern und damit eine gute radiale Aufweitung des Dichtringes zu ermöglichen, erweitert sich der Grund der Ringnut zweckmässigerweise entgegen der Auspressrichtung konisch. Durch diese konische Erweiterung werden Absätze, welche eine Beschädigung des Dichtringes zur Folge haben können, vermieden. Das radiale Aufweiten des Dichtringes erfolgt dadurch mit steigendem Druck der abzugebenden Masse praktisch proportional.

Um eine Verklemmung des Dichtringes im Ringspalt zu vermeiden, ist es vorteilhaft, wenn sich entgegen der Auspressrichtung an die konische Erweiterung des Grundes der Ringnut eine Anschlagschulter anschliesst. Eine solche Anschlagschulter kann zweckmässigerweise rechtwinklig zur Längsachse des Auspresskolbens verlaufen. Zusammen mit einem entsprechend ausgebildeten Dichtring kann die Anschlagschulter jedoch auch nach der einen oder anderen Seite geneigt werden. Wesentlich ist vor allem, dass der zwischen dem Aussendurchmesser der Anschlagschulter und dem Znnendurchmesser des Behälters verbleibende Ringspalt möglichst gering wird.

Das Einführen des Auspresskolbens in den Behälter darf durch den Dichtring möglichst nicht behindert werden. Zu diesem Zweck sollte der Dichtring in eine den Auspresskolben radial nicht überragende Stellung gebracht werden können. Um dies zu ermöglichen, muss die Ringnut genügend breit dimensioniert sein. Es ist daher zweckmassig, wenn die Breite der Ringnut etwa das 2-fache der maximalen Tiefe der Ringnut beträgt.

Die Tiefe der Ringnut ist ebenfalls abhängig von der Form des Dichtringes. Auch hier ist es vorteilhaft, wenn die maximale Tiefe der Ringnut etwa das 2-fache der minimalen Tiefe beträgt. Die minimale Tiefe der Ringnut ist mit Vorteil kleiner und die maximale Tiefe der Ringnut grösser als die radiale Abmessung des Dichtringes.

Im Prinzip können Dichtringe aus unterschiedlichem Material und von unterschiedlicher Form verwendet werden. So ist es beispielsweise möglich, handelsübliche O-Ringe zu verwenden. Bei diesen Dichtringen besteht allerdings die Gefahr, dass sie in den zwischen den Auspresskolben und der Behälterwandung bestehenden Ringspalt hineingepresst und dabei beschädigt werden. Um dies zu vermeiden, weist der Dichtring zweckmässigerweise in unverformtem Zustand einen viereckigen Querschnitt auf. Dieser Querschnitt kann beispielsweise quadratisch, rechteckig oder trapezförmig ausgebildet sein. Je nach Viskosität der abzugebenden Masse sind für den Dichtring weichere oder härtere Materialien zu verwenden.

Die Erfindung soll nachstehend anhand der sie beispielsweise wiedergebenden Zeichnungen näher erläutert werden. Es zeigen:

Fig. 1 einen Behalter mit erfindungsgemässem Auspresskolben, in der Transportstellung mit druckloser Masse,

Fig. 2 das Einführen eines in Fig. 1 dargestellten Auspresskolbens in einen Behälter,

Fig. 3 einer Ausschnitt des Auspresskolbens mit unter Druck stehender Masse, in vergrössertem Maßstab.

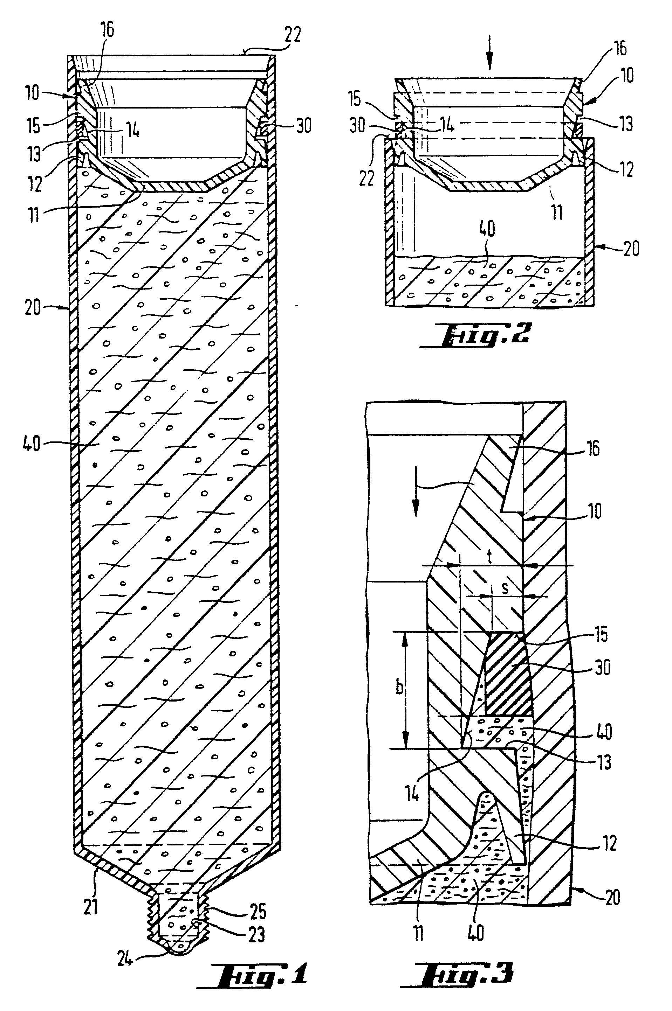

Der aus den Figuren 1 bis 3 ersichtliche, insgesamt mit 10 bezeichnete Auspresskolben weist einen in Auspressrichtung gewölbten Boden 11 auf. Das vordere Ende des Auspresskolbens 10 ist mit einer radial federnden Dichtlippe 12 versehen. In einer Ringnut 13 ist ein elastisch verformbarer Dichtring 30 angeordnet. Die Ringnut 13 weist eine sich entgegen der Auspressrichtung verringernde Tiefe auf, wobei sich der Grund 14 der Ringnut 13 entgegen der Auspressrichtung konisch erweitert. Entgegen der Auspressrichtung schliesst an die konische Erweiterung des Grundes 14 der Ringnut 13 eine etwa senkrecht zu Längsachse des Auspresskolbens 10 verlaufende Anschlagschulter für den Dichtring 30 an. Das rückwärtige Ende des Auspresskolbens 10 ist mit einem Dichtrand 16 versehen.

Ein insgesamt mit 20 bezeichneter, zylindrischer Behälter weist ein in Auspressrichtung vorderes Ende 21 sowie ein rückwärtiges Ende 22 auf. Das vordere Ende 21 des Behälters 20 ist mit einer Abgabeöffnung 23 versehen, welche in Fig. 1 durch eine Membran 24 verschlossen ist. Beim Gebrauch des Behälters wird nach Entfernen der Membran 24 eine nicht dargestellte Abgabetülle auf ein Gewinde 25 des Behälters 20 geschraubt. Der Behälter 20 enthält eine plastische Masse 40.

Bei dem in Fig. 1 dargestellten, drucklosen Zustand des Behälters befindet sich der Dichtring 30 etwa im mittleren Bereich der Ringnut 13. Dabei berührt er etwa gerade die Innenwandung des Behälters 20. In diesem Zustand lässt sich der Auspresskolben 20 ohne grössere Mühe verschieben.

Fig. 2 zeigt das Einführen des Auspresskolbens 10 in den Behälter 20. Dabei ist der Dichtring 30 ganz an das vordere Ende der Ringnut 13 geschoben worden. In dieser Stellung überragt der Dichtring 30 den Auspresskolben 10 praktisch nicht, so dass der Auspresskolben 10 unter Verdrängung allfällig vorhandener Luft mühelos in das rückwärtige Ende 22 des Behälters 20 eingeführt werden kann. Die federnde Dichtlippe 12 übernimmt dabei primär die Abdichtfunktion.

Bei dem in Fig. 3 vergrössert dargestellten Ausschnitt befindet sich der Auspresskolben 10 in Vorschubstellung. Dabei wirkt trotz der Dichtlippe 12 in die Ringnut 13 eingedrungene Masse 40 axial auf den Dichtring 30 und schiebt diesen gegen die Anschlagschulter 15. Da die Tiefe s am rückwärtigen Ende der Ringnut 13 geringer ist als die maximale Tiefe t am vorderen Ende der Ringnut 13, wird der Dichtring 30 dabei gleichzeitig auch radial aufgeweitet und nach aussen gegen die Wandung des Behälters 20 gepresst. Die Breite b der Ringnut 13 beträgt etwa das Doppelte der maximalen Tiefe t der Ringnut 13. Lässt der Druck in der Masse 40 nach, so entspannt sich der Dichtring 30 wieder und gelangt etwa in die in Fig. 1 dargestellte Ruhestellung. Der Dichtring 30 weist in unverformten Zustand einen etwa rechteckigen Querschnitt auf. Durch diese Ausbildung wird der Dichtring an seinem rückwärtigen Ende durch den Grund 14 der Ringnut 13 radial nach aussen gegen die Wandung des Behälters 20 gepresst. Im vorderen Bereich des Dichtringes 30 kann die Nasse 40 den Dichtring ebenfalls gegen die Wandung des Behälters 20 pressen.

**Patentansprüche**

1. Auspresskolben (10) für zylindrische, eine plastische Masse (40) enthaltende Behälter (20), der an seiner Aussenseite mit einer Ringnut (13) versehen ist, wobei in der Ringnut (13) ein elastisch verformbarer Dichtring (30) angeordnet ist, dadurch gekennzeichnet, dass die Ringnut (13) eine sich entgegen der Auspressrichtung verringernde Tiefe aufweist und die Breite (b) der Ringnut (13) grösser ist, als die Breite des Dichtringes (30).

2. Auspresskolben nach Anspruch 1, dadurch gekennzeichnet, dass sich der Grund (14) der Ringnut (13) entgegen der Auspressrichtung konisch erweitert.

3. Auspresskolben nach Anspruch 2, dadurch gekennzeichnet, dass sich entgegen der Auspressrichtung an die konische Erweiterung des Grundes (14) der Ringnut (13) eine Anschlagschulter (15) anschliesst.

4. Auspresskolben nach einem der Ansprüche 1 bis 3, dadurch gekennzeichnet, dass die breite (b) der Ringnut (13) etwa das 2-fache der maximalen Tiefe (t) der Ringnut (13) beträgt.

5. Auspresskolben nach einem der Ansprüche 1 bis 4, dadurch gekennzeichnet, dass die maximale Tiefe (t) der Ringnut (13) etwa das 2-fache der minimalen Tiefe (s) beträgt.

6. Auspresskolben nach einem der Ansprüche 1 bis 5, dadurch gekennzeichnet, dass der Dichtring (30) in unverformtem Zustand einen viereckigen Querschnitt aufweist.

**Claims**

1. A squeezing-out piston (10) for cylindrical containers (20) containing a plastic substance (40), which is provided with an annular groove (13) on its outside, an elastically deformable sealing ring (30) being arranged in the annular groove, characterised in that the annular groove (13) has a depth which reduces contrary to the squeezing-out direction and the width (b) of the annular groove (13) is greater than the width of the sealing ring (30).

2. A squeezing-out piston according to claim 1, characterised in that the bottom (14) of the annular groove (13) widens conically contrary to the squeezing-out direction.

3. A squeezing-out piston according to claim 2, characterised in that contrary to the squeezing-out direction a stop shoulder (15) adjoins the conical widening of the bottom (14) of the annular groove (13).

4. A squeezing-out piston according to one of claims 1 to 3, characterised in that the width (b) of the annular groove (13) amounts to approximately twice the maximum depth (t) of the annular groove (13).

5. A squeezing-out piston according to one of claims 1 to 4, characterised in that the maximum depth (t) of the annular groove (13) amounts to approximately twice the minimum depth (s).

6. A squeezing-out piston according to one of claims 1 to 5, characterised in that the sealing ring (30) has a quadrangular cross-section in the undeformed state.

**Revendications**

1. Piston d'éjection (10) pour des récipients cylindriques (20) contenant une substance plastique (40) lequel est muni sur sa face extérieure d'une rainure annulaire (13), un joint d'étanchéité (30) déformable élastiquement étant disposé dans ladite rainure annulaire (13), caractérisé en ce que la rainure annulaire (13) présente une profondeur qui diminue dans le sens opposé à la direction d'éjection et que la largeur (b) de la rainure annulaire (13) est plus grande que la largeur du joint d'étanchéité (30).

2. Piston d'éjection selon la revendication 1, caractérisé en ce que le fond (14) de la rainure annulaire (13) s'élargit de manière conique dans le sens opposé à la direction d'éjection.

3. Piston d'éjection selon la revendication 2, caractérisé en ce que, dans le sens opposé à l'éjection, un épaulement d'arrêt (15) fait suite à l'élargissement conique du fond (14) de la rainure annulaire (13).

4. Piston d'éjection selon l'une des revendications 1 à 3, caractérisé en ce que la largeur (b) de la rainure annulaire (13) est égale à environ 2 fois la profondeur maximale (t) de la rainure annulaire (13).

5. Piston d'éjection selon l'une des revendications 1 à 4, caractérisé en ce que la profondeur maximale (t) de la rainure annulaire (13) est égale à environ 2 fois la profondeur minimale (s).

6. Piston d'éjection selon l'une des revendications 1 à 5, caractérisé en ce que le joint d'étanchéité (30) présente, à l'état non déformé, une section quadrangulaire.

**Fig. 1**

**Fig. 2**

**Fig. 3**